# EUROPÄISCHE PATENTSCHRIFT

(11) **EP 1 989 662 B1**
(45) Veröffentlichungstag und Bekanntmachung des Hinweises auf die Patenterteilung: **03.02.2010**
(21) Anmeldenummer: 07712323.0
(22) Anmeldetag: 26.02.2007
(51) Int. Cl.: G06K 9/46

(54) **VERFAHREN ZUM ERKENNEN VON OBJEKTEN UND OBJEKTERKENNUNGSSYSTEM**
METHOD FOR IDENTIFYING OBJECTS, AND OBJECT IDENTIFICATION SYSTEM
DISPOSITIF POUR LA DETECTION D'OBJETS ET SYSTEME DE DETECTION D'OBJETS

(30) Priorität: 27.02.2006 DE 102006008936
(43) Veröffentlichungstag der Anmeldung: 12.11.2008
(73) Patentinhaber: SIEMENS AKTIENGESELLSCHAFT, 80333 München (DE)
(72) Erfinder: SCHMITT, Klemens, 76187 Karlsruhe (DE)
(86) Internationale Anmeldenummer: PCT/EP2007/051797
(87) Internationale Veröffentlichungsnummer: WO 2007/099076

(56) Entgegenhaltungen:
- WO-A-02/21427
- US-A1- 2004 066 964
- US-A1- 2005 169 531
- GAO Y ET AL: "Line segment Hausdorff distance on face matching" PATTERN RECOGNITION, ELSEVIER, KIDLINGTON, GB, Bd. 35, Nr. 2, Februar 2002 (2002-02), Seiten 361-371, XP004323378 ISSN: 0031-3203

## Beschreibung

Die vorliegende Erfindung betrifft ein Verfahren zum Erkennen von Objekten gemäß dem Oberbegriff des Patentanspruchs 1, wobei jeweils ein Muster eines zu erkennenden Objekts in Form eines aus Kantenpunkten gebildeten Musterkantenbildes in das Objektverarbeitungssystem eingelernt wird und anschließend wenigstens ein mittels einer Bildaufnahmeeinheit aufgenommenes, zu untersuchendes Bild auf ein Vorhandensein eines einem betreffenden Muster entsprechenden Objekts untersucht wird, indem Kantenpunkte in dem aufgenommenen Bild mit Kantenpunkten des Musterkantenbildes verglichen werden, wobei ein Gesamtqualitätswert als Maß für eine Übereinstimmung des Objekts mit dem Muster bestimmt wird.

Weiterhin betrifft die vorliegende Erfindung ein Objekterkennungssystem gemäß dem Oberbegriff des Patentanspruchs 9, mit einer Bildaufnahmeeinheit zum Aufnehmen von Muster- und Objektbildern und mit einer Bildverarbeitungseinheit, die zum Erzeugen von Kantenbildern aus den aufgenommenen Muster- und Objektbildern ausgebildet ist, wobei wenigstens ein Muster eines in einem aufgenommenen Bild zu suchenden Objekts in Form eines Kantenbildes aus Kantenpunkten für einen Vergleich mit Kantenpunkten in dem aufgenommenen Bild eingelernt ist, durch den ein Gesamtqualitätswert für eine Übereinstimmung des Objekts mit dem Muster bestimmbar ist.

Darüber hinaus betrifft die vorliegende Erfindung ein Computerprogrammprodukt gemäß dem Oberbegriff des Patentanspruchs 10, insbesondere zur Verwendung in einem Objekterkennungssystem mit einer Bildaufnahmeeinheit zum Aufnehmen von Muster- und Objektbildern und mit einer Bildverarbeitungseinheit, die zum Erzeugen von Kantenbildern aus den aufgenommenen Muster- und Objektbildern ausgebildet ist, wobei wenigstens ein Muster eines zu suchenden Objekts in Form eines Kantenbildes aus Kantenpunkten in das Objekterkennungssystem eingelernt ist.

Es ist bekannt, zur Erkennung von Objekten mittels eines Objekterkennungssystems zunächst das Bild eines zu suchenden Musters in Form eines Kantenbildes aus Kantenpunkten ("Musterkantenbild") einzulernen und anschließend aufgenommene Bilder von Objekten, so genannte Objektbilder, ebenfalls in Form von Kantenbildern ("Objektkantenbild") mit dem Musterkantenbild zu vergleichen, wobei ein entsprechender Qualitätswert bei dem Vergleich als Maß der Übereinstimmung bestimmt wird. Ab einem bestimmten Qualitätswert, im Rahmen dieser Anmeldung auch als "Gesamtqualitätswert" bezeichnet, wird das Objekt als erkannt gewertet, d. h. das Objekterkennungssystem zeigt an, dass in dem aufgenommenen Bild ein dem Muster im Wesentlichen entsprechendes Objekt aufgefunden wurde. Die einzelnen Kantenpunkte selbst haben einen Betrag (die Kantenstärke in diesem Punkt) und eine Orientierung, was dem Fachmann bekannt ist.

Bei derartigen Verfahren wird regelmäßig zunächst eine Grobsuche in dem aufgenommenen Bild vorgenommen, beispielsweise mittels eines so genannten Pyramidenverfahrens, um ein mit dem Muster zu vergleichendes Objekt zumindest grob hinsichtlich Ort und Orientierung zu lokalisieren ("Lokalisierung"). Derzeit wird einer solchen Lokalisierung eine Feinsuche bei allenfalls geringer Unterabtastung nachgeschaltet, die jedoch die Klassifikation zwischen Gut- und Schlechtteilen, d. h. zwischen solchen Objekten, die mit dem eingelernten Muster im Wesentlichen übereinstimmen, und anderen Objekten (die mit dem Muster nicht oder nur schlecht übereinstimmen), nur unzureichend implementiert. Auf diese Weise werden oftmals Schlechtteilen eigentlich Gutteilen entsprechende Qualitätswerte zugeordnet, so dass der Unterschied des Qualitätswerts zwischen richtig identifizierten Gutteilen und falsch identifizierten Schlechtteilen - dem so genannten Signal-Rausch-Abstand - in Einzelfällen zu gering ist. Bei vorbekannten Verfahren kann es in ungünstigen Fällen sogar vorkommen, dass ein Schlechtteil einen besseren Qualitätswert als ein Gutteil erhält.

Weiterhin ist bei vorbekannten Verfahren zur Objekterkennung als nachteilig anzusehen, dass größere Muster tendenziell geringere Qualitätswerte besitzen als kleinere Muster, was ebenfalls eine zuverlässige Klässifikation erschwert.

Aufgrund der Tatsache, dass bei heute bekannten Verfahren bei der Feinsuche für den Vergleich - die so genannte Korrelation - lediglich eine höhere Anzahl an Kantenpunkten verwendet wird als bei der Lokalisierung, dürfen einzelne Kantenpunkte beim Vergleich nicht abweichen, was jedoch insbesondere bei Bildverzerrüngen regelmäßig der Fall ist, wenn beispielsweise die Kamera nicht senkrecht zur Bildebene ausgerichtet ist. Weiterhin können bei vorbekannten Verfahren zufällig im Bild richtig gefundene Kantenpunkte den Qualitätswert fälschlicherweise nach oben treiben.

Dem Dokument Gao, Y. and Leung, M., "Line segment Hausdorff distance on face matching", Pattern Recognition, vol. 35, pp. 361-371, 2002 lässt sich ein Verfahren gemäß dem Oberbegriff des Anspruchs 1 entnehmen. Das Dokument betrifft die Erkennung von Gesichtern und befasst sich mit einem neuen Konzept betreffend die "Line segment Hausdorff distance". Hierbei werden Musterkantenbilder miteinander verglichen, wobei beim Vergleich von Linienabschnitten des Bildes dominante Punkte wie beispielsweise die Endpunkte der betreffenden Linienabschnitte verwendet werden. Des Weiteren wird die Orientierung der Linien ausgewertet, wodurch beispielsweise Linien mit großer unterschiedlicher Orientierung ausgeblendet werden können.

Des Weiteren ist aus der US 2005/0169531 A1 ein Verfahren zur Bildverarbeitung bekannt, mittels dem Kanten, Linien und Vierecke zuverlässig erkannt werden sollen. Zur Erkennung von Kanten werden der Kontrast sowie der Gradient eines Pixels verwendet. Aus den erhaltenen Kantenpunkten werden dann Linien erzeugt, wobei beispielsweise durch Anwendung einer Gradienten-Gewichteten Hough-Transformation der Betrag und die Orientierung der Kantenpunkte sowie die Linienlänge berücksichtigt werden können.

Bei dem in der genannten Druckschrift beschriebenen Verfahren werden zur Bestimmung einer Linie zunächst mit den ermittelten Kantenpunkten Berechnungen durchgeführt, wobei für jeden Kantenpunkt ein Wert ermittelt wird, welcher für die weitere Linienbestimmung benötigt wird. Bei der weiteren Linienbestimmung wird zunächst das größte lokale Maximum der zuvor ermittelten Werte bestimmt, welches größer als ein Schwellwert ist. Der Schwellwert ist proportional zu der minimal erwarteten Länge der Linien. Ist kein derartiges Maximum vorhanden, wird das Verfahren beendet. Ist ein lokales Maximum vorhanden, wird dieses markiert, damit es beim weiteren Verfahren nicht nochmals berücksichtigt wird, und werden die Kantenpunkte ermittelt, welche sich innerhalb eines vorbestimmten Abstands von der mittels der Hough-Transformation ermittelten Geraden, welche durch das lokale Maximum geht, befinden. Die ermittelten Kantenpunkte werden dann miteinander verbunden.

Nachteilig bei dem bekannten Verfahren ist es, dass zur Bestimmung einer Linie vorab Berechnungen durchgeführt werden müssen und die minimale Länge einer Linie bekannt sein muss.

Aus der US 2005/0063610 A1 ist ein Verfahren zum Übereinanderlegen von Bildteilen bekannt, bei welchem Kantenpunktenorientierungen korreliert werden. Die Korrelation ist umso besser, je mehr Kantenpunkte mit gleicher Orientierung aufeinander zu liegen kommen.

Der Erfindung liegt die Aufgabe zugrunde, ein Verfahren und ein System der eingangs genannten Art anzugeben, mittels welchen auf einfache Weise eine zuverlässige Klassifikation von Gut- und Schlechtteilen möglich ist.

Die Aufgabe wird bei einem Verfahren der eingangs genannten Art durch die kennzeichnenden Merkmale des Patentanspruchs 1 gelöst. Des Weiteren wird die Aufgabe bei einem Objekterkennungssystem der eingangs genannten Art durch die kennzeichnenden Merkmale des Patentanspruchs 9 gelöst. Darüber hinaus wird die Aufgabe bei einem Computerprogrammprodukt der eingangs genannten Art durch die kennzeichnenden Merkmale des Anspruchs 10 gelöst.

Vorteilhafte Ausgestaltungen des erfindungsgemäßen Verfahrens sind Gegenstand von Unteransprüchen.

Gemäß der vorliegenden Erfindung ist ein Verfahren zum Erkennen von Objekten mittels eines Objekterkennungssystems, wobei jeweils ein Muster eines zu erkennenden Objekts in Form eines Musterkantenbildes aus Kantenpunkten in das Objektverarbeitungssystem eingelernt wird und anschließend wenigstens ein mittels einer Bildaufnahmeeinheit aufgenommenes, zu untersuchendes Bild auf ein Vorhandensein eines dem Muster entsprechenden Objekts untersucht wird, indem Kantenpunkte in dem aufgenommenen Bild mit Kantenpunkten des Musterkantenbildes verglichen werden, wobei ein Gesamtqualitätswert als Maß für eine Übereinstimmung des Objekts mit dem Muster bestimmt wird, dadurch gekennzeichnet, dass anschließend für die Kantenpunkte des Musters durch Auffinden von Kantenpunkten mit im Wesentlichen gleicher Orientierung eine Linienzugehörigkeit zu Musterlinien bestimmt wird und dass ein Kantenpunkt in dem aufgenommenen Bild als zu einem dem Muster entsprechenden Objekt gehörend gewertet wird, wenn eine vorgegebene Anzahl von Nachbarkantenpunkten des betreffenden Kantenpunkts eine der Orientierung einer Musterlinie im Wesentlichen entsprechende Orientierung aufweist.

Des Weiteren ist erfindungsgemäß ein Objekterkennungssystem mit einer Bildaufnahmeeinheit zum Aufnehmen von Muster- und Objektbildern und mit einer Bildverarbeitungseinheit, die zum Erzeugen von Kantenbildern aus den aufgenommenen Muster- und Objektbildern ausgebildet ist, wobei wenigstens ein Muster eines in einem aufgenommenen Bild zu suchenden Objekts in Form eines Kantenbildes aus Kantenpunkten für einen Vergleich mit Kantenpunkten in dem aufgenommenen Bild eingelernt ist, durch den ein Gesamtqualitätswert für eine Übereinstimmung des Objekts mit dem Muster bestimmbar ist, dadurch gekennzeichnet, dass die Bildverarbeitungseinheit zum Durchführen des erfindungsgemäßen Verfahrens ausgebildet ist.

Darüber hinaus ist ein Computerprogrammprodukt, insbesondere zur Verwendung in einem Objekterkennungssystem mit einer Bildaufnahmeeinheit zum Aufnehmen von Muster- und Objekt-bildern und mit einer Bildverarbeitungseinheit, die zum Erzeugen von Kantenbildern aus den aufgenommenen Muster- und Objektbildern ausgebildet ist, wobei wenigstens ein Muster eines zu suchenden Objekts in Form eines Kantenbildes aus Kantenpunkten in das Objekterkennungssystem eingelernt ist, gekennzeichnet durch Programmcode-Sequenzen, bei deren Ausführung insbesondere in der Bildverarbeitungseinheit ein Verfahren nach einem der Ansprüche 1 bis 10 durchgeführt wird.

Dem vorgeschlagenen Lösungsansatz liegt die Erkenntnis zugrunde, dass sich ein Qualitätswert mit verbessertem Signal-Rausch-Abstand angeben lässt, wenn anders als bei herkömmlichen Verfahren die Linienzugehörigkeit eines Kantenpunktes stärker bei der Korrelation berücksichtigt wird. Auf diese Weise sind zuverlässigere Qualifikationen möglich.

Dementsprechend ist in Weiterbildung des erfindungsgemäßen Verfahrens vorgesehen, dass für jeden als zu einem dem Muster entsprechenden Objekt gehörend gewerteten Kantenpunkt ein Linien-Qualitätswert erhöht wird.

Um kleinere Toleranzen bei Bildverzerrungen zu tolerieren, insbesondere wenn eine verwendete Bildaufnahmeeinheit (Kamera) nicht senkrecht zur Bildebene ausgerichtet ist, wird erfindungsgemäß jede Musterlinie einzeln korreliert und die maximale Amplitude des Ergebnisses zu dem Gesamtqualitätswert hinzuaddiert. Dementsprechend ist in Weiterbildung des erfindungsgemäßen Verfahrens vorgesehen, dass jede Musterlinie einzeln mit Kantenpunkten des aufgenommenen Bildes verglichen wird und dass ein entsprechender maximaler Linien-Qualitätswert zu dem Gesamtqualitätswert addiert wird. Ein bevorzugter Wert für die Toleranz beträgt jeweils ± 1 Bildpunkt (Pixel) in zwei zueinander senkrechten Richtungen der Bildebene, z. B. in x- und y-Richtung. Um diesen Wert wird das aufgenommene Bild beziehungsweise der darin im Zuge der Lokalisierung bestimmte Bereich verschoben, um den maximalen Linien-Qualitätswert aufzufinden.

Um möglichst flexibel auf derartige Toleranzen reagieren zu können, sollten die betrachteten Linien keine übermäßige Länge aufweisen. Daher ist in Weiterbildung des erfindungsgemäßen Verfahrens vorgesehen, dass eine Länge der Musterlinien auf einen vorgegebenen Maximalwert begrenzt wird. In bestimmten Anwendungen hat sich als vorteilhaft erwiesen, die Linien einer maximalen Länge von 100 Bildpunkten (Pixel) abzuschneiden.

Die relative Orientierung zwischen Musterkantenpunkten und Objektkantenpunkten stellt über die Bildung des Skalarprodukts das ausschlaggebende Element bei de Korrelation dar. Um starke Kanten des Musters im Sinne herausragender Merkmale desselben bei der Korrelation stärker zu gewichten, ist in Weiterbildung des erfindungsgemäßen Verfahrens vorgesehen, dass beim Vergleichen von Kantenpunkten das Skalarprodukt aus einer Orientierung eines Musterkantenpunkts mit einer Orientierung eines Kantenpunkts des aufgenommenen Bildes gebildet wird, wobei der entsprechende Wert des Skalarprodukts vor dem Aufnehmen in einen Linien-Qualitätswert mit einem Gewichtungsfaktor gewichtet wird.

In Weiterbildung des erfindungsgemäßen Verfahrens ist zur Bestimmung des Gewichtungsfaktors vorgesehen, dass die Bestimmung des Gewichtungsfaktors ausgehend von einem Anfangswert die nachfolgend aufgeführten Schritte beinhaltet:
a) Hinzufügen einer tatsächlichen Kantenstärke in den Kantenpunkten einer Musterlinie zu dem Anfangswert,
b) Hinzufügen einer jeweiligen Kantenstärke in Schritt a) nicht berücksichtigter benachbarter Kantenpunkte der betreffenden Kantenpunkte der Musterlinie zu dem Ergebnis aus Schritt a) zum Bestimmen jeweils einer erweiterten Kantenstärke der Musterlinie,
c) Wiederholen der Schritte a) und b) für alle Musterlinien und Bestimmen eines Maximalwerts für die erweiterte Kantenstärke der Musterlinien,
d) Normierung der Werte für die Kantenstärke aller Kantenpunkte auf den Maximalwert,
e) Multiplikation aller normierten Werte für die Kantenstärke mit dem Wert für die tatsächliche Kantenstärke in dem entsprechenden Kantenpunkt.

Die vorstehend beschriebene Gewichtung der Kantenstärke implementiert einen pseudoquadratischen Algorithmus, was sich vorteilhaft auf den benötigten Speicherplatzbedarf und die (numerische) Bearbeitungsgeschwindigkeit auswirkt.

In Ergänzung zu der weiter oben beschriebenen Linienkorrelation und zur Verbesserung deren Effizienz ist in Weiterbildung des erfindungsgemäßen Verfahrens vorgesehen, dass für eine Anzahl von Kantenpunkten in dem aufgenommenen Bild jeweils ein Orientierungswert senkrecht zu einer Musterlinie mit einem vorgegebenen Orientierungsschwellwert verglichen wird und dass nur Kantenpunkte mit einem den Orientierungsschwellwert überschreitenden Orientierungswert in die Bestimmung des Gesamtqualitätswerts eingehen. Auch hierbei wird vorzugsweise in einem bestimmten Toleranzintervall um die bei der Lokalisierung aufgefundene Lage des Objekts beziehungsweise Objektbildes nach einem maximalen Orientierungswert (Gradient) senkrecht zur Musterlinie gesucht und dieser Maximalwert wird mit dem Orientierungsschwellwert verglichen.

Um weiterhin zu verhindern, dass zu viele unsaubere ("minderwertige") Kanten den Qualitätswert über Gebühr vergrößern, was zu einer unsicheren Qualifikation führen würde, ist in Weiterbildung des erfindungsgemäßen Verfahrens vorgesehen, dass für eine Anzahl von Kantenpunkten in dem aufgenommenen Bild ein Kantenschwellwert gesetzt wird und dass nur solche Kantenpunkte in die Bestimmung des Gesamtqualitätswerts eingehen, deren Beitrag zur Kantenstärke, d. h. deren Wert für die Kantenstärke, den Kantenschwellwert übersteigt.

Durch das erfindungsgemäße Vorsehen dieser Schwellwerte wird eine Verwässerung des Qualitätswertes verringert.

Im Zuge einer verbesserten Benutzerfreundlichkeit und zwecks einer verbesserten Ausnutzung von Systemressourcen, insbesondere hinsichtlich Speicherplatzbedarf und Verarbeitungsgeschwindigkeit, ist in Weiterbildung des erfindungsgemäßen Verfahrens vorgesehen, dass der Orientierungsschwellwert und/oder der Kantenschwellwert in Abhängigkeit von einer Anzahl gefundener Kantenpunkte in dem aufgenommenen Bild automatisch generiert wird.

Um die Vorteile einer Linienkorrelation optimal nutzen zu können, sieht eine andere Weiterbildung des erfindungsgemäßen Verfahrens vor, dass Linienfragmente des Musters vor dem Vergleich zu vollständigen Linien ergänzt werden.

Weitere Eigenschaften und Vorteile der vorliegenden Erfindung ergeben sich aus der nachfolgenden Beschreibung eines Ausführungsbeispiels anhand der Zeichnung.

Es zeigt:
- Fig. 1: ein schematisches Blockschaltbild eines erfindungsgemäßen Objekterkennungssystems,
- Fig. 2: ein Ablaufdiagramm eines erfindungsgemäßen Verfahrens und
- Fig. 3: ein detailliertes Ablaufdiagramm eines Verfahrensschritts gemäß der Fig. 2.

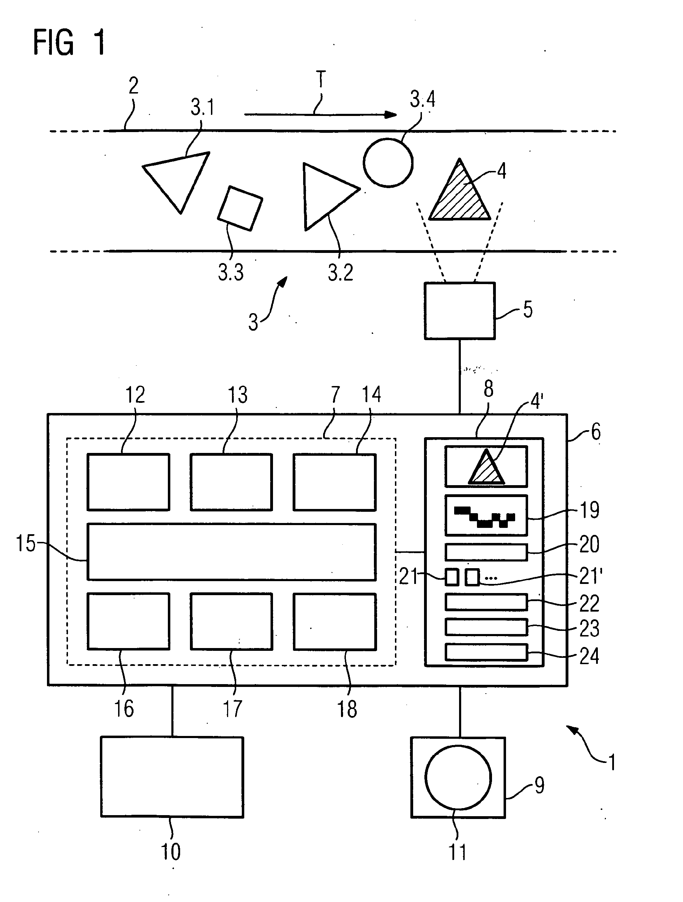

Fig. 1 zeigt anhand eines schematischen Blockschaltbildes eine Ausgestaltung des erfindungsgemäßen Objekterkennungssystems 1. Gemäß Fig. 1 ist das Objekterkennungssystem 1 dazu ausgebildet, auf einer Fördereinrichtung 2 befindliche Objekte 3.1, 3.2 durch Vergleichen mit einem Muster 4 (Musterobjekt) zu erkennen, wobei die Objekte 3.1, 3.2 sowie weitere Objekte 3.3, 3.4 in einer Transportrichtung T der Fördereinrichtung 2 bewegt sind.

Zu diesem Zweck weist das erfindungsgemäße Objekterkennungssystem 1 eine Bildaufnahmeeinheit 5 auf, die mit einer Bildverarbeitungseinheit 6 in signältechnischer Wirkverbindung steht. Die Bildverarbeitungseinheit 6 beinhaltet eine Datenverarbeitungseinheit 7 und eine Speichereinheit 8. Des Weiteren sind mit der Bildverarbeitungseinheit eine Eingabeeinrichtung 9 und eine Ausgabeeinrichtung 10 verbunden. Die Eingabeeinrichtung 9 ist gemäß dem gezeigten Ausführungsbeispiel zum Einlesen geeigneter, maschinenlesbarer Datenträger 11 ausgebildet. Insbesondere kann es sich bei der Eingabeeinrichtung 9 um ein CD-ROM-Laufwerk, ein DVD-ROM-Laufwerk, eine Netzwerk-Schnittstelle oder dergleichen handeln. Entsprechend handelt es sich bei dem Datenträger 11 um eine CD-ROM, eine DVD-ROM beziehungsweise ein geeignet moduliertes Trägersignal, was dem Fachmann bekannt ist. Auf diese Weise lassen sich mit Hilfe der Eingabeeinrichtung 9 insbesondere Programmcode-Sequenzen zur erfindungsgemäßen Ausbildung der Bildverarbeitungseinheit 6 beziehungsweise der Datenverarbeitungseinheit 7 bereitstellen.

Bei der Ausgabeeinrichtung 10 handelt es sich insbesondere um eine Anzeigeeinrichtung, wie einen Bildschirm oder dergleichen, oder ein Software-Log, was dem Fachmann an sich bekannt ist.

Die Datenverarbeitungseinheit 7 der Bildverarbeitungseinheit 6 umfasst erfindungsgemäß eine Reihe von Modulen 12-18, die nach dem Vorstehenden vorzugsweise softwaretechnisch ausgebildet sind, wobei der jeweils entsprechende Programmcode mittels des Datenträgers 11 über die Eingabeeinrichtung 9 bereitstellbar ist, wie vorstehend beschrieben.

Erfindungsgemäß umfasst die Datenverarbeitungseinrichtung 7 ein Kantenmodul 12, ein Linienmodul 13, ein Speicherungsmodul 14, ein Korrelationsmodul 15, ein Schwellwertmodul 16, ein Qualitätswertmodul 17 sowie ein Gewichtungsmodul 18, auf deren jeweilige Funktion weiter unten noch detailliert eingegangen wird.

Im Betrieb des erfindungsgemäßen Objekterkennungssystems 1 wird zunächst mittels der Bildaufnahmeeinheit 5 ein Bild eines anschließend zu erkennenden/suchenden Mustergegenstands (Musterobjekt) 4 aufgenommen. Die entsprechenden Bilddaten werden von der Bildaufnahmeeinheit 5 an die Bildverarbeitungseinheit 6 übertragen und in der dortigen Datenverarbeitungseinheit 7 verarbeitet. Dabei werden zunächst mittels des Kantenmoduls 12 in an sich bekannter Weise Kantenpunkte des aufgenommenen Musterbildes bestimmt. Mit anderen Worten: Durch das Kantenmodul 12 wird das aufgenommene Bild des Musterobjekts 4 in ein Kantenbild umgewandelt. Die so bestimmten Kantenpunkte weisen jeweils einen Betrag (die Kantenstärke) und eine Richtung (die Kantenorientierung) auf, wobei letztere senkrecht zum Verlauf der Kante in Richtung eines Kontrastgradienten des Bildes orientiert ist, wie dem Fachmann geläufig ist.

Anhand des so ermittelten Kantenbildes des Musterobjekts 4 wird anschließend durch das Linienmodul 13 eine Linienzugehörigkeit der einzelnen aufgefundenen Kantenpunkte bestimmt. Insbesondere wird hierbei untersucht, ob benachbarte Kantenpunkte des Kantenbildes des Musterobjekts 4 (im Folgenden auch als "Musterkantenbild" 4' bezeichnet) eine in gewissen, vorgebbaren Grenzen übereinstimmende Orientierung aufweisen. Wenn beispielsweise zwei benachbarte Kantenpunkte des Musterkantenbildes 4' eine bis auf einen Wert von 10° (30°) übereinstimmende Orientierung besitzen, werden diese Kantenpunkte als zu einer gemeinsamen (Kanten-)Linie in dem Musterkantenbild 4' gehörig gewertet. Derartige Linien werden nachfolgend auch als "Musterlinien" bezeichnet. Die vorstehend beschriebene Untersuchung wird für alle aufgefundenen Kantenpunkte des Musterkantenbildes 4' durchgeführt. Das Musterkantenbild 4' selbst wird nach an sich bekanntem Ausdünnen (Thinning) der Musterlinien in der Speichereinheit 8 der Bildverarbeitungseinheit 6 abgelegt.

Mittels des Speicherungsmoduls 14 werden anschließend alle als zu einer bestimmten Musterlinie gehörend ermittelten Kantenpunkte in Form von Liniendatensätzen 19 in geeigneter Weise in der Speichereinheit 8 der Bildverarbeitungseinheit 6 gespeichert, wobei aus Gründen der Übersichtlichkeit in Fig. 1 nur ein einzelner derartiger Liniendatensatz 19 explizit dargestellt ist. Anhand der Liniendatensätze 19 lassen sich nachfolgend alle zu einer bestimmten Linie des Musterkantenbildes 4' gehörigen Kantenpunkte in einfacher Weise ermitteln. Entsprechende Speicheralgorithmen, wie sie innerhalb des Speicherungsmoduls 14 Verwendung finden, sind dem Fachmann bekannt.

Erfindungsgemäß erzeugt das Linienmodul 13 nur Linien beziehungsweise Liniendatensätze 19 mit einer über einen vorgegebenen Maximalwert begrenzten Linienlänge, welche einer maximalen Anzahl zu einer Linie verknüpfter Kantenpunkte des Musterkantenbildes 4' entspricht. Dies geschieht, um bei der nachfolgenden Korrelation (siehe unten) kleinere Toleranzen aufgrund von Bildverzerrungen ausgleichen zu können. Derartige Verzerrungen ergeben sich insbesondere dann, wenn die Bildaufnahmeeinheit 5 sich nicht direkt oberhalb eines betrachteten Objekts 3.1-3.4 befindet beziehungsweise aufgrund der Quantisierung von Punktpositionen innerhalb des aufgenommenen Bildes. In der Praxis hat sich eine Begrenzung der Linienlänge auf 100 Bildpunkte (Pixel) als vorteilhaft herausgestellt.

Nachdem die Linienzugehörigkeit aller ermittelten Kantenpunkte des Musterkantenbildes 4', wie vorstehend beschrieben, ermittelt wurde, werden mittels der Bildaufnahmeeinheit 5 nach und nach Bilder zu untersuchender Objekte 3.1-3.4 aufgenommen, die mittels der Fördereinrichtung 2 an der Bildaufnahmeeinheit 5 vorbei bewegt werden. Gemäß der gezeigten Ausführungsform handelt es sich bei den Objekten 3.1, 3.2 um solche Objekte, die im Wesentlichen identisch mit dem Musterobjekt 4 sind und entsprechend durch das erfindungsgemäße Objekterkennungssystem als solche erkannt werden sollen, indem ihnen jeweils ein hoher Gesamtqualitätswert zugeordnet wird. Dagegen handelt es sich bei den weiterhin dargestellten Objekten 3.3, 3.4 um solche Objekte, die durch das Objekterkennungssystem 1 als nicht mit dem Musterobjekt 4 identisch zu bewerten sind (entsprechend geringer Gesamtqualitätswert). Zu diesem Zweck wird das mittels der Bildaufnahmeeinheit 5 von den jeweiligen Objekten 3.1-3.4 aufgenommene Bild in der Bildverarbeitungseinheit 5 mit dem Musterkantenbild 4' verglichen und es wird der Gesamtqualitätswert als Maß für eine Übereinstimmung des Objekts 3.1-3.4 mit dem Musterobjekt 4 bzw. dem Musterkantenbild 4' bestimmt und gegebenenfalls über die Ausgabeeinrichtung 10 ausgegeben.

Im Rahmen des angesprochenen Vergleichs von Objekt(-bild) und Muster(-bild) kommen erfindungsgemäß weitere Module der Datenverarbeitungseinheit 7 zum Einsatz: Zunächst wird wiederum mittels des Kantenmoduls 12 aus dem aufgenommenen Bild eines Objekts 3.1-3.4 ("Objektbild") ein entsprechendes Kantenbild bestimmt, wie weiter oben bereits für das Musterobjekt 4 detailliert beschrieben. Das so erzeugte "Objektkantenbild" wird anschließend mit dem in der Speichereinheit 8 abgelegten Musterkantenbild 4' verglichen. Den eigentlichen Vergleich - die Korrelation - führt erfindungsgemäß das Korrelationsmodul 15 durch, in dem als vordringliches Element die Orientierung der Kantenpunkte ausgewertet wird. Hierzu wird in dem Korrelationsmodul 15 das Skalarprodukt zwischen der Orientierung eines Musterkantenpunkts und der Orientierung eines Objektkantenpunkts gebildet. Dabei ergibt sich für das Skalarprodukt dann ein maximaler Wert, wenn die Orientierung eines Objektkantenpunkts mit der Orientierung eines Musterkantenpunkts zusammenfällt. Somit lässt sich das ermittelte Skalarprodukt jeweils als Summand für die Bestimmung eines Qualitätswertes heranziehen.

Erfindungsgemäß wird die vorstehend in ihren Grundzügen beschriebene Korrelation für alle in dem Musterkantenbild 4' bestimmten Musterlinien (Liniendatensätze 19) berechnet, wobei zur Vermeidung isolierter Gutpixel, d. h. Bildpunkte, die in dem Objektbild als zum Musterbild gehörend erkannt werden, mittels des Korrelationsmoduls 15 untersucht wird, ob eine vorgegebene Anzahl von Nachbarpunkten eines zur Zeit betrachteten Objektkantenpunkts die gleiche Orientierung wie eine gerade betrachtete Musterlinie hat. Nur wenn diese Bedingung erfüllt ist, wird ein Gutpixel positiv zu einem entsprechenden Linien-Qualitätswert hinzugezählt. Dies geschieht innerhalb des Qualitätswertmoduls 17, in dem entsprechend für jede erkannte Linie in dem Musterkantenbild 4' ein entsprechender Gutzähler (siehe unten) geführt wird. Auf diese Weise wird erfindungsgemäß die Linienzugehörigkeit von Objektkantenpunkten bei der Korrelation berücksichtigt.

Darüber hinaus werden erfindungsgemäß bei der Korrelation mittels des Korrelationsmodüls 15 auch die Kantenstärken der einzelnen Kanten (Linien) des Musterkantenbildes 4' durch eine zusätzliche Gewichtung berücksichtigt. Dieser linienspezifische Gewichtungsfaktor wird erfindungsgemäß mittels des Gewichtungsmoduls 18 folgendermaßen bestimmt: Für jede Linie (durch einen entsprechenden Liniendatensatz 19 definierte Musterlinie) des Musterkantenbildes 4' werden die tatsächlichen Kantenstärken, d. h. die mittels des Kantenmoduls 12 aus dem aufgenommenen Bild bestimmten Werte der Kantenstärke aller Kantenpunkte der betreffenden Linie, ausgehend von einem Anfangswert (hier speziell dem Wert Null) addiert. Anschließend werden für jeden Kantenpunkt dieser Linie die Werte der Kantenstärke von benachbarten Kantenpunkten (nächste und übernächste Nachbarn) hinzuaddiert, sofern diese bei dem vorangehenden Additionsschritt noch nicht mit berücksichtigt wurden. Bei den benachbarten Kantenpunkten handelt es sich insbesondere um solche Kantenpunkte, die beim Erzeugen der Liniendatensätze 19 im Zuge des Thinning (siehe oben) verloren gegangen waren. Beim Thinning handelt es sich um einen Prozess, bei dem die Kanten- beziehungsweise Linienbreite auf genau einen Bildpunkt eingeschränkt wird, was dem Fachmann an sich bekannt ist. Durch das Hinzuaddieren der Kantenstärke benachbarter Kantenpunkte werden vor allem kleine Muster verstärkt, bei denen die Linien viele Krümmungen machen. Auf diese Weise ergibt sich für jede Linie des Musterkantenbildes eine Art erweiterte Gesamtkantenstärke.

Anschließend wird der Maximalwert aus den ermittelten Gesamtkantenstärken bestimmt. Dieser Maximalwert kann noch durch einen vorgegebenen Teilerwert, z. B. den Wert Vier, geteilt werden, um insbesondere ein Überlaufen von Zahlenwerten zu vermeiden. Zum Zwecke einer Normierung wird anschließend jeder Kantenpunktwert des Musterkantenbildes nochmals durch den gegebenenfalls heruntergeteilten Maximalwert der Gesamtkantenstärke geteilt. Zwecks einer so.genannten pseudoquadratischen Gewichtung wird anschließend jeder der so geteilten Kantenpunktwerte mit seinem vorherigen Wert, d. h. der tatsächlichen Kantenstärke in diesem Punkt multipliziert.

Der vorstehend beschriebene pseudoquadratische Algorithmus hat den Vorteil, dass eine quasi quadratische Gewichtung der Kantenpunkte bei der Korrelation möglich ist, ohne dass hierfür für jeden einzelnen Kantenpunktwert ein übermäßiger Speicherbedarf erforderlich wäre. Insbesondere kann im Zuge der vorstehend beschriebenen Ausgestaltung mit Shorts für die einzelnen Kantenpunkte gearbeitet werden, wie üblich.

Der so bestimmte Gewichtungsfaktor 20 kann erfindungsgemäß in der Speichereinheit 8 der Bildverarbeitungseinheit 6 abgelegt werden und steht somit dem Korrelationsmodul 15 zur erfindungsgemäß stärkeren Berücksichtigung der Kantenstärke bei der Korrelation zur Verfügung, wie vorstehend beschrieben. Alternativ kann der Gewichtungsfaktor auch unmittelbar auf das gespeicherte Musterkantenbild 4' angewendet werden, so dass dieses die vorstehend beschriebene Gewichtung direkt enthält.

Nach dem Vorstehenden wird also erfindungsgemäß jede Linie, von der ein Liniendatensatz 19 vorliegt, einzeln durch das Korrelationsmodul 15 mit den einzelnen Objektkantenpunkten korreliert. Das Korrelationsmodul 15 ist dabei weiterhin dazu ausgebildet, eine Korrelation mit einer jeweiligen Toleranz von ± 1 Pixel in zwei zueinander senkrechten Richtungen in der Bildebene vorzunehmen, d. h., das Musterkantenbild 4' wird jeweils in einer und/oder zwei zueinander senkrechten Raumrichtungen um eine bestimmte Anzahl von Pixeln verschoben, woraufhin erneut mittels des Korrelationsmoduls 15 eine Korrelation zwischen dem Musterkantenbild 4' und einem gegebenen Objektkantenbild berechnet wird. Für jede Linie wird so ein maximales Korrelationsergebnis bestimmt und als Linien-Qualitätswert 21, 21', ... (entsprechend einem Endwert des oben erwähnten Gutzählers) in der Speichereinheit 8 der Bildverarbeitungseinheit 6 abgelegt. Anschließend werden die einzelnen Linien-Qualitätswerte 21, 21' ... mittels des Qualitätswertmoduls 17 zu einem Gesamtqualitätswert für das Objektkantenbild beziehungsweise das zugehörige Objekt 3.1-3.4 addiert. Auch der Gesamtqualitätswert 22 wird in der Speichereinheit 8 abgelegt und anschließend dazu verwendet, die Qualität der Übereinstimmung zwischen dem Musterobjekt 4 und dem zu untersuchenden Objekt 3.1-3.4 anzuzeigen, insbesondere unter Verwendung der Ausgabeeinrichtung 10.

In Ergänzung zu der vorstehend beschriebenen Linienkorrelation ist die Bildverarbeitungseinheit 6 beziehungsweise die Datenverarbeitungseinheit 7 des erfindungsgemäßen Objekterkennungssystems weiterhin zum Durchführen einer so genannten Punkttoleranzkorrelation ausgebildet. Bei der Punkttoleranzkorrelation wird der beste Wert der Kantenorientierung senkrecht zum Verlauf einer Musterlinie, d. h. der beste Kantengradient gesucht. Zu diesem Zweck ist in der Speichereinheit 8 ein Orientierungsschwellwert 23 abgelegt. Der Orientierungsschwellwert 23 gibt an, welchen Gradienten ein Kantenpunkt des Objektkantenbildes mindestens haben muss, um bei der oben beschriebenen Korrelation durch das Korrelationsmodul 15 Eingang in einen Linien-Qualitätswert 21, 21', ... zu finden. Mit anderen Worten: Ein Objektkantenpunkt, dessen Gradient unterhalb des Orientierungsschwellwerts 23 liegt, wird bei der Summenbildung zur Bestimmung des entsprechenden Linien-Qualitätswerts 21, 21', ... nicht berücksichtigt. In Verknüpfung mit der weiter oben beschriebenen Linienkorrelation führt dieses Verfahren dazu, dass deren Effizienz noch weiter verbessert wird.

Um weiterhin den Einfluss "minderwertiger" Kanten auf den Gesamtqualitätswert 22 zu verringern, wird bei der weiter oben beschriebenen Korrelation mittels des Korrelationsmoduls 15 weiterhin ein in der Speichereinheit 8 abgelegter Kantenschwellwert 24 berücksichtigt. Der Kantenschwellwert 24 stellt einen Schwellwert für die Stärke eines Kantenpunkts dar, wobei bei einem Unterschreiten des Kantenschwellwerts 24 der entsprechende Punkt wiederum bei der Korrelation unberücksichtigt bleibt und sich somit nicht negativ auf den Linien-Qualitätswert 21, 21', ... beziehungsweise den Gesamtqualitätswert 22 auswirken kann. Demnach besitzt der Kantenschwellwert 24 bezüglich der Kantenstärke eines Kantenpunkts dieselbe Bedeutung wie der Orientierungsschwellwert 23 hinsichtlich der Orientierung eines Kantenpunkts.

Das Schwellwertmodul 16 der Bildverarbeitungseinheit 6 beziehungsweise der Datenverarbeitungseinheit 7 dient in diesem Zusammenhang erfindungsgemäß dazu, eine automatische Anpassung des Kantenschwellwerts 24 und/oder des Orientierungsschwellwerts 23 vorzunehmen, indem in dem Schwellwertmodul 16 entsprechende Algorithmen implementiert werden, die weiterhin auch eine Gesamtanzahl der nach erfolgter Aufnahme des Musterbildes durch das Kantenmodul 12 (sowie entsprechendem Ausdünnen/Thinning der Kanten und Verbinden durch das Linienmodul 13) gefundenen Kantenpunkte berücksichtigen kann. Insbesondere kann der jeweilige Schwellwert von einer Standardabweichüng der im Muster gefundenen Kantenpunkte hinsichtlich Kantenstärke und Orientierung abhängig sein.

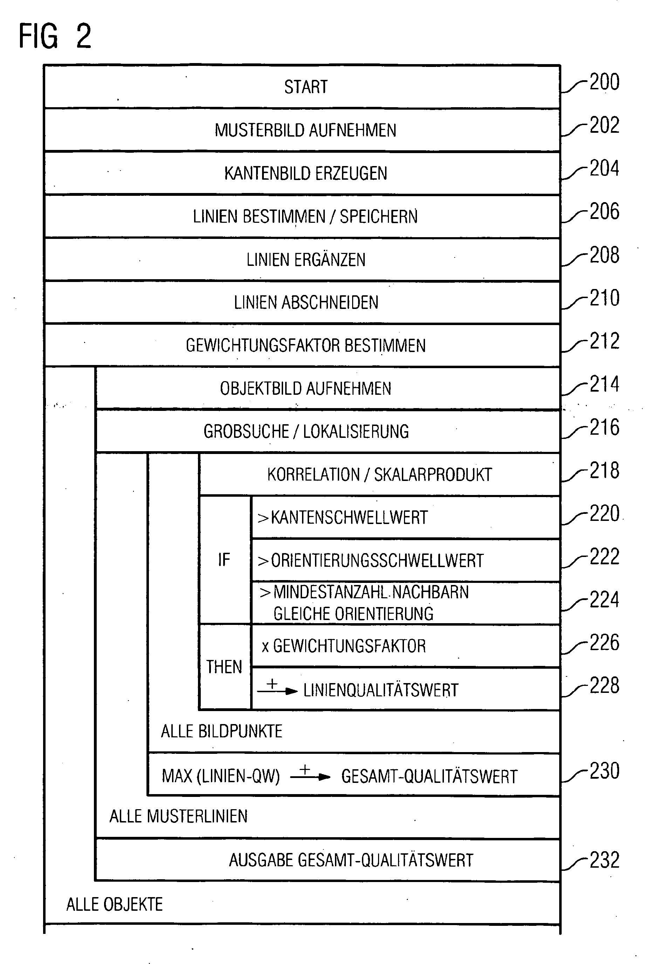

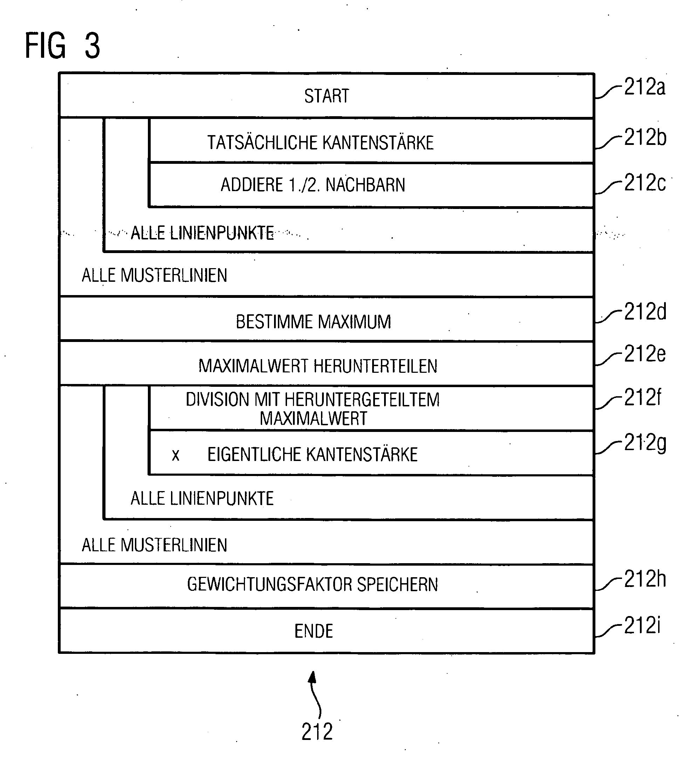

Die Fig. 2 zeigt anhand eines Struktogramms den Ablauf einer Ausgestaltung des erfindungsgemäßen Verfahrens zum Erkennen von Objekten mittels eines Objekterkennungssystems, insbesondere des Objekterkennungssystems 1 gemäß Fig. 1. Das erfindungsgemäße Verfahren startet in Schritt 200. In einem anschließenden Schritt 202 wird das Bild eines Musterobjekts aufgenommen. Danach werden in Schritt 204 Kantenpunkte in dem aufgenommenen Musterbild bestimmt, d. h., das Bild wird in ein Kantenbild umgewandelt. Zugleich werden in Schritt 204 geeignete Werte für den Kantenschwellwert und den Orientierungsschwellwert bestimmt, wie vorstehend beschrieben. In einem nachfolgenden Schritt 206 werden Musterlinien des Musterkantenbildes bestimmt und in geeigneter Form abgespeichert. Wie anhand des Verfahrensschritts 208 dargestellt ist, können anschließend aufgefundene Linienfragmente, d. h. Linien, deren Kantenpunktzahl unterhalb des weiter oben eingeführten Maximalwerts von beispielsweise 100 Punkten liegt, zu längeren Linien ergänzt werden. Dies ist insbesondere dann der Fall, wenn innerhalb einer längeren Linie nur einzelne oder wenige Kantenpunkte fehlen, um einen durchgängigen Linienverlauf sicherzustellen. In dem nachfolgenden Schritt 210 werden dagegen zu lange Linien abgeschnitten beziehungsweise unterteilt, um eine Toleranz gegenüber Bildverzerrungen zu erreichen, wie ebenfalls weiter oben bereits beschrieben. Anschließend wird in Schritt 212 der Gewichtungsfaktor für die Kantenstärke bestimmt, über den die Stärke einzelner Kanten/Linien bei der Korrelation stärker gewichtet wird. (Eine detailliertere Darstellung des vorstehend beschriebenen Verfahrensschritts 212 ist Gegenstand der nachfolgenden Fig. 3.)

Nachdem auf diese Weise das betreffende Muster in das System eingelernt wurde, wird in einem nachfolgenden Schritt 214 das Bild zunächst eines zu untersuchenden beziehungsweise zu erkennenden Objekts 3.1-3.4 (Fig. 1) aufgenommen und ebenfalls in ein Kantenbild (Objektkantenbild) umgewandelt. Anschließend erfolgt in Schritt 216 eine Grobsuche, um ein eventuell dem Musterobjekt entsprechendes Objekt in dem aufgenommenen Bild hinsichtlich seines Ortes und seiner Orientierung zumindest grob zu lokalisieren und entsprechend einen Bildbereich des Objektkantenbildes anzugeben, auf den das erfindungsgemäße Verfahren zum (Fein-)Erkennen von Objekten angewendet werden soll. Eine solche Grobsuche erfolgt regelmäßig nach einem so genannten Pyramidenverfahren in mehreren Stufen mit entsprechend mehrfacher Unterabtastung des Bildes, was dem Fachmann an sich bekannt ist.

Im Anschluss an Schritt 216 wird erfindungsgemäß zunächst für eine Musterlinie über alle Bildpunkte des Objektkantenbildes die Korrelation zwischen Muster und Objekt bestimmt, indem in Schritt 218 das Skalarprodukt zwischen den betreffenden Muster- und Objektkantenpunkten beziehungsweise deren Orientierungen gebildet wird. Die nachfolgenden Schritte 220, 222, 224 enthalten jeweils eine Abfrage dahin gehend, ob der bestimmte Wert des Skalarprodukts über dem in Schritt 204 bestimmten Kantenschwellwert liegt (Schritt 220), ob der Gradient in dem betreffenden Objektkantenpunkt über dem in Schritt 204 bestimmten Orientierungsschwellwert liegt (Schritt 222) und ob eine ausreichende Anzahl an Nachbarpunkten zu derselben Musterlinie gehört (Schritt 224). Nur wenn alle drei Abfragen bejaht werden, wird das betreffende Skalarprodukt bei der Bestimmung des zugehörigen Linien-Qualitätswerts für die betrachtete Linie berücksichtigt. Anderenfalls wird das betreffende Skalarprodukt verworfen und das Verfahren wird mit dem nächsten Objektbildpunkt in Schritt 218 fortgesetzt. Für den Fall, dass alle drei Abfragen 220-224 bejaht wurden, wird der ermittelte Wert des Skalarprodukts in Schritt 226 mit dem in Schritt 212 bestimmten Gewichtungsfaktor multipliziert und in Schritt 228 zu dem Qualitätswert für die betrachtete Linie addiert. Wie weiter oben dargestellt, kann der Gewichtungsfaktor alternativ auch bereits in dem abgespeicherten Musterkantenbild oder stattdessen in den zugehörigen Liniendatensätzen enthalten sein.

Die Schritte 218-228 werden - wie gesagt - für alle Musterkanten und unter Einschluss bestimmter Toleranzen - wie oben beschrieben - wiederholt. Anschließend wird in Schritt 230 aus den so ermittelten Linien-Qualitätswerten der maximale Linien-Qualitätswert für die betreffende Linie ermittelt. Wenn dieses Verfahren für alle gefundenen Musterlinien abgeschlossen ist, werden die einzelnen Linien-Qualitätswerte zu einem Gesamtqualitätswert für den Muster-Objekt-Vergleich addiert und der Gesamtqualitätswert wird in Schritt 232 ausgegeben. Anschließend kann ein neues Objekt aufgenommen und verglichen werden. Das erfindungsgemäße Verfahren endet in Schritt 234, wenn entweder kein Objekt mehr zur Verfügung steht oder ein neues Muster eingelernt werden soll.

Fig. 3 zeigt detailliert mittels eines weiteren Struktogramms den Ablauf des Verfahrensschritts 212 gemäß Fig. 2. Die einzelnen Verfahrens-Unterschritte sind in Fig. 3 mit den Bezugszeichen 212 und angehängtem Kleinbuchstaben a, b, c, ... bezeichnet.

Das Verfahren beginnt in Schritt 212a. Ausgangswert für die Bestimmung des Gewichtungsfaktors 20 (Fig. 1) ist im Schritt 212b die tatsächliche Kantenstärke in einem bestimmten Musterbildpunkt. Zu dieser werden in Schritt 212c die entsprechenden Werte der Kantenstärke für die ersten und zweiten Nachbarn dieses Punktes addiert, d. h. die Kantenstärke derjenigen Kantenpunkte, die zuvor beim Ausdünnen/Thinning der Musterlinie verloren gegangen waren. Dieses Verfahren wird fortgesetzt, bis alle Linienpunkte berücksichtigt wurden. Diese Prozedur wird für alle gefundenen Musterlinien durchlaufen. Anschließend wird in Schritt 212d der Maximalwert für die so ermittelten aufsummierten (erweiterten) Kantenstärken bestimmt. Aus numerischen Gründen wird dieser Maximalwert in einem anschließenden Schritt 212e durch einen festen, vorgegebenen Wert geteilt, beispielsweise durch den Wert Vier. Der so heruntergeteilte Maximalwert wird in einem anschließenden Schritt 212f, der wiederum für alle Linien und alle Linienpunkte wiederholt wird, dazu verwendet, die Kantenstärke jedes Kantenwerts weiter zu verringern beziehungsweise zu normieren. In einem anschließenden Schritt 212g werden dann alle Linienpunkte aller Linien mit dem ursprünglichen Wert der Kantenstärke an dieser Stelle multipliziert, so dass auf diese Weise eine pseudoquadratische Gewichtung der einzelnen Kantenpunkte beziehungsweise Kantenstärke bei der Korrelation erreicht wird. Der so ermittelte Gewichtungsfaktor für jeden Musterkantenpunkt wird gespeichert (Schritt 212h; entweder separat oder direkt in dem Musterkantenbild) und steht somit - wie vorstehend beschrieben - zur anschließenden Gewichtung der Kantenstärke bei der Berechnung zur Verfügung. Das (Unter-)Verfahren endet mit Schritt 212i.

Auf diese Weise wird erfindungsgemäß erreicht, dass bei einem durchzuführenden Muster-Objekt-Vergleich automatisch bestimmte Bildregionen richtig gewichtet werden. Dadurch ergibt sich insbesondere eine Vergrößerung des Signal-Rausch-Abstands, d. h. eine Vergrößerung des Abstands zwischen Gut- und Schlechterkennung, da insbesondere isolierte Gutpixel und/oder eine große Anzahl "minderwertiger" Kanten den Gesamtqualitätswert eines Vergleichs nicht mehr über Gebühr nach oben treiben. Dadurch ist erfindungsgemäß ein sicheres Klassifizieren von Gut- und Schlechtteilen möglich. Darüber hinaus werden aufgrund des Abschneidens von Linien Verzerrungen innerhalb des Musters in gewissem Umfang toleriert, so dass insbesondere die Größe des Musters nunmehr nur eine geringe Rolle bei der Qualitätsaussage spielt.

## Patentansprüche

1. Verfahren zum Erkennen von Objekten (3.1-3.4) mittels eines Objekterkennungssystems (1), wobei jeweils ein Muster (4) eines zu erkennenden Objekts (3.1-3.4) in Form eines aus Kantenpunkten gebildeten Musterkantenbildes (4') in das Objektverarbeitungssystem eingelernt wird und anschließend wenigstens ein mittels einer Bildaufnahmeeinheit (5) aufgenommenes, zu untersuchendes Bild auf ein Vorhandensein eines einem betreffenden Muster (4) entsprechenden Objekts (3.1-3.4) untersucht wird, indem Kantenpunkte in dem aufgenommenen Bild mit Kantenpunkten des Musterkantenbildes (4') verglichen werden, wobei ein Gesamtqualitätswert (22) als Maß für eine Übereinstimmung des Objekts (3.1-3.4) mit dem Muster (4) bestimmt wird, **dadurch gekennzeichnet, dass** für die Kantenpunkte des Musters (4) durch Auffinden von Kantenpunkten mit im Wesentlichen gleicher Orientierung eine Linienzugehörigkeit zu Musterlinien (19) bestimmt wird und dass ein Kantenpunkt in dem aufgenommenen Bild als zu einem dem Muster (4) entsprechenden Objekt (3.1, 3.2) gehörend gewertet wird, wenn eine vorgegebene Anzahl von Nachbarkantenpunkten des betreffenden Kantenpunkts eine der Orientierung einer Musterlinie (19) im Wesentlichen entsprechende Orientierung aufweist, wobei beim Vergleichen von Kantenpunkten das Skalarprodukt aus einer Orientierung eines Musterkantenpunkts mit einer Orientierung eines Kantenpunkts des aufgenommenen Bildes gebildet wird, wobei der entsprechende Wert des Skalarprodukts vor dem Aufnehmen in einen Linien-Qualitätswert mit einem Gewichtungsfaktor gewichtet wird, wobei eine Bestimmung des Gewichtungsfaktors ausgehend von einem Anfangswert die nachfolgend aufgeführten Schritte beinhaltet:
a) Hinzufügen einer tatsächlichen Kantenstärke in den Kantenpunkten einer Musterlinie (19) zu dem Anfangswert,
b) Hinzufügen einer jeweiligen Kantenstärke in Schritt a) nicht berücksichtigter benachbarter Kantenpunkte der betreffenden Kantenpunkte der Musterlinie zu dem Ergebnis aus Schritt a) zum Bestimmen jeweils einer erweiterten Kantenstärke der Musterlinie,
c) Wiederholen der Schritte a) und b) für alle Musterlinien und Bestimmen eines Maximalwerts für die erweiterte Kantenstärke der Musterlinien,
d) Normierung der Werte für die Kantenstärke aller Kantenpunkte auf den Maximalwert,
e) Multiplikation aller normierten Werte für die Kantenstärke mit dem Wert für die tatsächliche Kantenstärke in dem entsprechenden Kantenpunkt.

2. Verfahren nach Anspruch 1, **dadurch gekennzeichnet, dass** für jeden als zu einem dem Muster entsprechenden Objekt (4) gehörend gewerteten Kantenpunkt ein Linien-Qualitätswert (21, 21') erhöht wird.

3. Verfahren nach Anspruch 1 oder 2, **dadurch gekennzeichnet, dass** jede Musterlinie (19) einzeln mit Kantenpunkten des aufgenommenen Bildes verglichen wird und dass ein entsprechender maximaler Linien-Qualitätswert (21, 21') zu dem Gesamtqualitätswert (22) addiert wird.

4. Verfahren nach einem der Ansprüche 1 bis 3, **dadurch gekennzeichnet, dass** eine Länge der Musterlinien auf einen vorgegebenen Maximalwert begrenzt wird.

5. Verfahren nach einem der Ansprüche 1 bis 4, **dadurch gekennzeichnet, dass** für eine Anzahl von Kantenpunkten in dem aufgenommenen Bild jeweils ein Orientierungswert senkrecht zu einer Musterlinie mit einem vorgegebenen Orientierungsschwellwert verglichen wird und dass nur Kantenpunkte mit einem den Orientierungsschwellwert überschreitenden Orientierungswert in die Bestimmung des Gesamtqualitätswerts eingehen.

6. Verfahren nach einem der Ansprüche 1 bis 5, **dadurch gekennzeichnet, dass** für eine Anzahl von Kantenpunkten in dem aufgenommenen Bild ein Kantenschwellwert gesetzt wird und dass nur solche Kantenpunkte in die Bestimmung des Gesamtqualitätswerts eingehen, deren Beitrag zur Kantenstärke den Kantenschwellwert übersteigt.

7. Verfahren nach Anspruch 5 oder 6, **dadurch gekennzeichnet, dass** der Orientierungsschwellwert und/oder der Kantenschwellwert in Abhängigkeit von einer Anzahl gefundener Kantenpunkte in dem aufgenommenen Bild automatisch generiert werden.

8. Verfahren nach einem der Ansprüche 1 bis 7, **dadurch gekennzeichnet, dass** Linienfragmente des Musters vor dem Vergleich zu vollständigen Linien ergänzt werden.

9. Objekterkennungssystem (1) mit einer Bildaufnahmeeinheit (5) zum Aufnehmen von Muster- und Objektbildern und mit einer Bildverarbeitungseinheit (6), die zum Erzeugen von Kantenbildern (4') aus den aufgenommenen Muster- und Objektbildern ausgebildet ist, wobei wenigstens ein Muster (4) eines in einem aufgenommenen Bild zu suchenden Objekts in Form eines aus Kantenpunkten gebildeten Musterkantenbildes (4') für einen Vergleich mit Kantenpunkten in dem aufgenommenen Bild eingelernt ist, durch den ein Gesamtqualitätswert (22) für eine Übereinstimmung des Objekts (3.1-3.4) mit dem Muster bestimmbar ist, **dadurch gekennzeichnet, dass** die Bildverarbeitungseinheit (6) zum Durchführen des Verfahrens nach einem der vorangehenden Ansprüche ausgebildet ist.

10. Computerprogrammprodukt zur Verwendung in einem Objekterkennungssystem (1) mit einer Bildaufnahmeeinheit (5) zum Aufnehmen von Muster- und Objektbildern und mit einer Bildverarbeitungseinheit (6), die zum Erzeugen von Kantenbildern aus den aufgenommenen Muster- und Objektbildern ausgebildet ist, wobei wenigstens ein Muster eines zu suchenden Objekts in Form eines Kantenbildes aus Kantenpunkten in das Objekterkennungssystem eingelernt ist, **gekennzeichnet durch** Programmcode-Sequenzen, bei deren Ausführung in der Bildverarbeitungseinheit (6) ein Verfahren nach einem der Ansprüche 1 bis 8 durchgeführt wird.

## Claims

1. A method for identifying objects (3.1-3.4) using an object identification system (1), wherein a respective pattern (4) of an object (3.1-3.4) to be identified is taught to the object processing system in the form of a pattern edge image (4') formed from edge points and subsequently at least one image to be examined, recorded by means of an image recording unit (5), is examined for the presence of a corresponding object (3.1-3.4) matching a relevant pattern (4) by comparing edge points in the recorded image with edge points of the pattern edge image (4'), wherein an overall quality value (22) is determined as a measure of the correspondence between the object (3.1-3.4) and the pattern (4), **characterized in that** an association with lines in the pattern (19) is then determined for the edge points of the pattern (4) by finding edge points with essentially the same orientation, and that an edge point in the recorded image is assessed as belonging to an object (3.1, 3.2) that corresponds to the pattern (4) if a predetermined number of neighboring edge points adjacent to the relevant edge point have an orientation that essentially corresponds to the orientation of a line in the pattern (19) with, during the comparison of edge points, the scalar product being formed from an orientation of a pattern edge point with an orientation of an edge point of the recorded image, with the corresponding value of the scalar product before recording being weighted in a line quality value with a weighting factor, with a determination of the weighting factor, starting from an initial value, including the steps given below:
a) Adding an actual edge strength in the edge points of a line of the pattern (19) to the initial value,
b) Adding a respective edge strength in step a) of neighboring edge points of the relevant edge points of the line of the pattern not taken into consideration to the result from step a) for determining an expanded edge strength of the line of the pattern in each case,
c) Repeating steps a) and b) for all lines of the patterns and determining a maximum value for the expanded edge strength of the lines of the pattern,
d) Normalizing the values for the edge strength of all edge points to the maximum value,
e) Multiplying all normalized values for the edge strength by the value for the actual edge strength in the corresponding edge point.

2. The method according to claim 1, **characterized in that**, for each edge point assessed as belonging to an object (4) corresponding to the pattern, a line quality value (21, 21') is increased.

3. The method according to claim 1 or 2, **characterized in that** each line of the pattern (19) is compared individually with edge points of the recorded image and that a corresponding maximum line quality value (21, 21') is added to the overall quality value (22).

4. The method according to one of the claims 1 to 3, **characterized in that** a length of the lines of the pattern is limited to a predetermined maximum value.

5. The method according to one of the claims 1 to 4, **characterized in that**, for a number of edge points in the recorded image, an orientation value at right angles to a line of the pattern is compared with a predetermined orientation threshold, and that only edge points with an orientation value exceeding the orientation threshold value are included in the determination of the overall quality value.

6. The method according to one of the claims 1 to 5, **characterized in that**, for a number of edge points in the recorded image, an edge threshold value is set and that only those edge points are included in the determination of the overall quality value of which the contribution to the edge strength exceeds the edge threshold value.

7. The method according to claim 5 or 6, **characterized in that** the orientation threshold value and/or the edge threshold value are generated automatically as a function of a number of found edge points in the recorded image.

8. The method according to one of the claims 1 to 7, **characterized in that** line fragments of the pattern are expanded into complete lines before the comparison.

9. An object identification system (1) with an image recording unit (5) for recording pattern images and object images and with an image processing unit (6) which is embodied for creating edge images (4') from the recorded pattern images and object images, wherein at least one pattern (4) of an object to be searched for in a recorded image in the form of an edge image (4') comprising edge points is taught for a comparison with edge points in the recorded image, through which an overall quality value (22) for a correspondence between the object (3.1-3.4) and the pattern is able to be determined, **characterized in that** the image processing unit (6) is embodied to execute the method as claimed in one of the previous claims.

10. A computer program product for use in an object identification system (1) with an image recording unit (5) for recording pattern and object images and with an image processing unit (6) which is embodied for creating edge images from the recorded pattern and object images, with at least one pattern of an object to be searched for in the form of an edge image comprising edge points being learned in the object identification system, **characterized by** program code sequences, during the execution of which in the image processing unit (6) a method as claimed in one of the claims 1 to 8 is executed.

## Revendications

1. Procédé de reconnaissance d'objets ( 3.1 à 3.4 ) au moyen d'un système ( 1 ) de reconnaissance d'objets, dans lequel on entre, pour apprentissage dans le système de traitement d'objets, respectivement un modèle ( 4 ) d'un objet ( 3.1 à 3.4 ) à reconnaître sous la forme d'une image ( 4' ) formée de points de contour, et ensuite on analyse la présence d'un objet ( 3.1 à 3.4 ) correspondant au modèle ( 4 ) concerné, dans au moins une image à analyser enregistrée, au moyen d'une unité ( 5 ) d'enregistrement d'image, en comparant des points de contour de l'image enregistrée à des points de contour de l'image ( 4' ) de contour du modèle, une valeur ( 22 ) globale de qualité étant déterminée en tant que mesure de la coïncidence de l'objet ( 3.1 à 3.4 ) avec le modèle ( 4 ), **caractérisé en ce que**, pour les points de contour du modèle ( 4 ), on détermine, en trouvant des points de contour ayant sensiblement la même orientation, une appartenance à des lignes ( 19 ) du modèle, et **en ce que** l'on évalue un point de contour de l'image enregistrée, comme appartenant à un objet ( 3.1, 3.2 ) correspondant au modèle ( 4 ), lorsqu'un nombre prescrit de points de contour voisins du point de contour concerné a une orientation correspondant essentiellement à l'orientation d'une ligne ( 19 ) du modèle, dans lequel, pour la comparaison de points de contour, on forme le produit scalaire d'une orientation d'un point de contour du modèle par une orientation d'un point de contour de l'image enregistrée, la valeur correspondante du produit scalaire étant pondérée avant l'enregistrement en une valeur de qualité de ligne par un facteur de pondération, une détermination du facteur de pondération comportant à partir d'une valeur initiale les stades mentionnés dans ce qui suit :
a) addition à la valeur initiale de l'intensité réelle de contour des points de contour d'une ligne ( 19 ) de modèle,
b) addition au résultat du stade a) d'une intensité respective de contour de points voisins non considérés au stade a) des points de contour concernés de la ligne de modèle pour déterminer respectivement une intensité de contour étendue de la ligne de modèle,
c) répétition des stades a) et b) pour toutes les lignes du modèle et détermination d'une valeur maximum pour l'intensité de contour étendue des lignes du modèle,
d) normation des valeurs des intensités de contour de tous les points de contour sur la valeur maximum,
e) multiplication de toutes les valeurs normées pour l'intensité de contour par la valeur de l'intensité de contour réelle dans les points de contour correspondants.

2. Procédé suivant la revendication 1, **caractérisé en ce que**, pour chaque point de contour évalué comme appartenant à un objet ( 4 ) correspondant au modèle, on élève une valeur ( 21, 21' ) de qualité de ligne.

3. Procédé suivant la revendication 1 ou 2, **caractérisé en ce que** l'on compare chaque ligne ( 19 ) de modèle individuellement à des points de contour de l'image enregistrée et **en ce que** l'on additionne une valeur ( 21, 21' ) de qualité de ligne maximum à la valeur ( 22 ) de qualité globale.

4. Procédé suivant l'une des revendications 1 à 3, **caractérisé en ce que** l'on limite une longueur des lignes du modèle à une valeur maximum prescrite.

5. Procédé suivant l'une des revendications 1 à 4, **caractérisé en ce que**, pour un nombre de points de contour de l'image enregistrée, on compare respectivement une valeur d'orientation perpendiculairement à une ligne du modèle à une valeur de seuil d'orientation prescrite et **en ce que** l'on n'entre, dans la détermination de la valeur de qualité globale, que des points de contour ayant une valeur d'orientation dépassant une valeur de seuil d'orientation.

6. Procédé suivant l'une des revendications 1 à 5, **caractérisé en ce que**, pour un nombre de points de contour de l'image enregistrée, on fixe une valeur de seuil de contour et on n'entre, dans la détermination de la valeur de qualité globale, que des points de contour, dont la contribution à l'intensité de contour dépasse la valeur de seuil de contour.

7. Procédé suivant la revendication 5 ou 6, **caractérisé en ce que** l'on produit automatiquement la valeur de seuil d'orientation et/ou la valeur de seuil de contour en fonction d'un nombre de points de contour trouvés dans l'image enregistrée.

8. Procédé suivant l'une des revendications 1 à 7, **caractérisé en ce que** l'on complète des fragments de lignes du modèle avant la comparaison en des lignes complètes.

9. Système ( 1 ) de reconnaissance d'objets comprenant une unité ( 5 ) d'enregistrement d'image pour l'enregistrement d'images de modèles et d'images d'objets et comprenant une unité ( 6 ) de traitement d'image, qui est constituée pour la production d'images ( 4' ) de contour à partir des images enregistrées de modèles et d'objets, au moins un modèle ( 4 ) d'un objet à analyser dans une image enregistrée étant entré pour apprentissage sous la forme d'une image ( 4' ) de contour de modèle formée de points de contour pour une comparaison avec les points de contour de l'image enregistrée, par laquelle une valeur ( 22 ) globale de qualité pour une coïncidence de l'objet ( 3.1 à 3.4 ) avec le modèle peut être déterminée, **caractérisé en ce que** l'unité ( 6 ) de traitement d'image est constituée pour effectuer le procédé suivant l'une des revendications précédentes.

10. Produit de programme informatique à utiliser dans le système ( 1 ) de reconnaissance d'objets, comprenant une unité ( 5 ) d'enregistrement d'image pour enregistrer des images de modèles et des images d'objets et une unité ( 6 ) de traitement d'image, qui est constituée pour la production d'images de contour à partir des images enregistrées de modèles et d'objets, au moins un modèle d'un objet à analyser, sous la forme d'une image de contour composée de points de contour, étant entré pour apprentissage dans le système de reconnaissance d'objets, **caractérisé par** des séquences de codes de programme, dont la réalisation dans l'unité ( 6 ) de traitement d'image effectue un procédé suivant l'une des revendications 1 à 8.
